(19) **Europäisches Patentamt**

**European Patent Office**

**Office européen des brevets**

(11) **EP 1 096 584 A1**

(12) **EUROPEAN PATENT APPLICATION**
published in accordance with Art. 158(3) EPC

(43) Date of publication:
02.05.2001 Bulletin 2001/18

(21) Application number: 99925358.6

(22) Date of filing: 16.06.1999

(51) Int. Cl.$^7$: **H01M 4/38**

(86) International application number:
PCT/JP99/03234

(87) International publication number:
WO 99/66573 (23.12.1999 Gazette 1999/51)

(84) Designated Contracting States:
**DE FR GB**

(30) Priority: 18.06.1998 JP 17152798

(71) Applicant:
**Sanyo Electric Co., Ltd.**
**Moriguchi-shi, Osaka-fu 570-8677 (JP)**

(72) Inventors:
• **IMOTO, Teruhiko,**
**Sanyo Elec. Co., Ltd.**
**Moriguchi-shi, Osaka 570-8677 (JP)**
• **OUCHI, Masutaka,**
**Sanyo Elec. Co., Ltd.**
**Moriguchi-shi, Osaka 570-8677 (JP)**
• **KATO, Kikuko,**
**Sanyo Elec. Co., Ltd.**
**Moriguchi-shi, Osaka 570-8677 (JP)**

• **HIGASHIYAMA, Nobuyuki,**
**Sanyo Elec. Co., Ltd.**
**Moriguchi-shi, Osaka 570- 8677 (JP)**
• **KIMOTO, Mamoru,**
**Sanyo Elec. Co., Ltd.**
**Moriguchi-shi, Osaka 570-8677 (JP)**
• **FUJITANI, Shin,**
**Sanyo Elec. Co., Ltd.**
**Moriguchi-shi, Osaka 570-8677 (JP)**
• **NISHIO, Koji,**
**Sanyo Elec. Co., Ltd.**
**Moriguchi-shi, Osaka 570-8677 (JP)**

(74) Representative:
**Glawe, Delfs, Moll & Partner**
**Patentanwälte**
**Postfach 26 01 62**
**80058 München (DE)**

(54) **HYDROGEN ABSORBING ALLOY FOR ALKALINE STORAGE BATTERY AND METHOD FOR PRODUCTION THEREOF, AND HYDROGEN ABSORBING ALLOY ELECTRODE FOR ALKALINE STORAGE BATTERY AND METHOD FOR PRODUCTION THEREOF**

(57) A hydrogen absorbing alloy for an alkaline storage battery having a crystal structure of a CaCu$_5$ type and represented by a composition formula MmNi$_x$Co$_y$Mn$_z$M$_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$) is so adapted as to have a surface region and a bulk region covered with the surface region and satisfy the condition of $a/b \geqq 1.2$, letting a be the sum of the respective abundance ratios of atoms Ni, Co, and Mn in the surface region and letting b the sum of the respective abundance ratios of atoms Ni, Co, and Mn in the bulk region.

**F i g 1**

## Description

Technical Field

The present invention relates generally to a hydrogen absorbing alloy for an alkaline storage battery used as a negative electrode material for an alkaline storage battery and a method of producing the same, and a hydrogen absorbing alloy electrode for an alkaline storage battery and a method of producing the same, and is particularly characterized in that the hydrogen absorbing alloy is treated to enhance the activity in the early stages of the hydrogen absorbing alloy, to increase an initial discharge capacity as well as to improve high-rate discharge characteristics in the alkaline storage battery using the hydrogen absorbing alloy.

Background Art

Conventionally, nickel-cadmium storage batteries have been generally used as alkaline storage batteries. However, in recent years, nickel-hydrogen storage batteries using a hydrogen absorbing alloy as a negative electrode material have been paid attention to in that they have a high capacity which is not less than twice that of the nickel cadmium storage batteries and are also superior in environmental safety because they do not use cadmium.

The nickel-hydrogen storage batteries have been used for various types of portable equipment. It is expected to further improve the performance of the nickel-hydrogen storage batteries.

In the nickel-hydrogen storage batteries, examples of the hydrogen absorbing alloy used for the negative electrode material include an Mm type hydrogen absorbing alloy using Mish metal (Mm) which is a mixture of rare earth elements and a Laves type hydrogen absorbing alloy.

In the hydrogen absorbing alloy, however, an oxide coating is generally easy to form on its surface by natural oxidation or the like. When a hydrogen absorbing alloy electrode is produced using the hydrogen absorbing alloy having the oxide coating thus formed on its surface, and is used for a negative electrode of the nickel-hydrogen storage battery, there are some problems. For example, the activity in the early stages of the hydrogen absorbing alloy is low, so that an initial battery capacity in the nickel-hydrogen storage battery is reduced.

Therefore, in recent years, a method of immersing a hydrogen absorbing alloy in an acid solution such as a hydrochloric acid solution, to remove an oxide coating on the surface of the hydrogen absorbing alloy has been proposed, as disclosed in JP-A-5-225975.

When the hydrogen absorbing alloy is thus immersed in the acid solution, to remove the oxide coating on the surface of the hydrogen absorbing alloy, active metal nickel Ni, metal cobalt Co, and so forth appear on the surface of the hydrogen absorbing alloy. However, the active metal nickel and metal cobalt are oxidized again. The activity in the early stages of the hydrogen absorbing alloy cannot be sufficiently improved, so that the initial battery capacity in the nickel-hydrogen storage battery is still low.

When the active metal nickel, metal cobalt, and so forth appear upon removal of the oxide coating on the surface of the hydrogen absorbing alloy, as described above, electrochemical contact resistance between particles of the hydrogen absorbing alloy is reduced, so that the high-rate discharge characteristics in the nickel-hydrogen storage battery are slightly improved. However, contact between the particles of the hydrogen absorbing alloy is not sufficient. Consequently, the contact resistance between the particles of the hydrogen absorbing alloy is still high, so that the high-rate discharge characteristics cannot be greatly improved.

Disclosure of Invention

The present invention solves various problems, as described above, in an alkaline storage battery using a hydrogen absorbing alloy as a negative electrode material.

Specifically, an object of the present invention is to enhance the activity in the early stages of a hydrogen absorbing alloy used as a negative electrode material of an alkaline storage battery, to increase an initial battery capacity and improve high-rate discharge characteristics in the alkaline storage battery using the hydrogen absorbing alloy.

A hydrogen absorbing alloy for an alkaline storage battery in the present invention is a hydrogen absorbing alloy having a crystal structure of a $CaCu_5$ type and represented by a composition formula $MmNi_xCo_yMn_zM_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), which has a surface region and a bulk region covered with the surface region, the surface region and the bulk region differing in composition, and satisfies the condition of $a/b \geqq 1.2$, letting a be the sum of the respective abundance ratios of atoms Ni, Co, and Mn in the surface region and letting b the sum of the respective abundance ratios of atoms Ni, Co, and Mn.

The surface region and the bulk region in the hydrogen absorbing alloy are definitely distinguished by observation using a scanning type transmission electron microscope (TEM), and differ in composition. The surface region is normally formed to a depth of approximately 80 nm from the surface of the hydrogen absorbing alloy.

In determining the surface region and the bulk region in the present invention, analysis is performed using the scanning type transmission electron microscope and an energy dispersion type X-ray analysis meter at spacing of several nanometers from the surface of each of the particles of the hydrogen absorbing alloy toward the center thereof, and the respective abundance ratios of metal elements at each of points of measurement are found. The respective abundance ratios of the metal elements are constant in a region inside of a certain point of measurement. The point of measurement is taken as the boundary, to take a region on the side of the surface from the point of measurement as the surface region and take a region on the side of the center from the point of measurement as the bulk region.

The sum a of the respective abundance ratios (atm%) of the atoms Ni, Co, and Mn in the surface region is a value measured at a middle point between the surface of each of the particles of the hydrogen absorbing alloy and the boundary, and the sum b of the respective abundance ratios (atm%) of the atoms Ni, Co, Mn in the bulk region is a value measured at a point on the side of the center of each of the particles of the hydrogen absorbing alloy from the boundary in which the respective abundance ratios of the metal elements are constant, as described above.

When a hydrogen absorbing alloy having a crystal structure of a $CaCu_5$ type and represented by a composition formula $MmNi_xCo_yMn_zM_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ) is used as a negative electrode material of an alkaline storage battery, as in the hydrogen absorbing alloy for an alkaline storage battery in the present invention, the hydrogen absorbing alloy is prevented from being corroded in an alkaline electrolyte, to prevent the amount of hydrogen absorbed by the hydrogen absorbing alloy from being reduced.

In the hydrogen absorbing alloy, when the condition of $a/b \geqq 1.2$ is satisfied, letting a be the sum of the respective abundance ratios (atm%) of the atoms Ni, Co, and Mn in the surface region and letting b be the sum of the respective abundance rations (atm%) of the atoms Ni, Co, and Mn in the bulk region, a lot of active Ni and Co exist in the surface region in the hydrogen absorbing alloy, so that the activity in the early stages of the hydrogen absorbing alloy is improved. In the alkaline storage battery using the hydrogen absorbing alloy, therefore, an initial battery capacity is increased.

In a method of producing a hydrogen absorbing alloy for an alkaline storage battery according to the present invention, the first step of obtaining particles of a hydrogen absorbing alloy having a crystal structure of a $CaCu_5$ type and represented by a composition formula $MmNi_xCo_yMn_zM_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), the second step of treating the particles of the hydrogen absorbing alloy in an acid solution, and the third step of heat-treating and sintering the particles of the hydrogen absorbing alloy treated in the acid solution at a temperature of not more than the melting point of the particles of the hydrogen absorbing alloy in a hydrogen atmosphere are carried out, to obtain a hydrogen absorbing alloy for an alkaline storage battery having a surface region and a bulk region covered with the surface region and satisfying the condition of $a/b \geqq 1.2$, letting a be the sum of the respective abundance ratios (atm%) of atoms Ni, Co, and Mn in the surface region and letting b the sum of the respective abundance ratios (atm%) of atoms Ni, Co, and Mn.

In the foregoing first step, in obtaining the particles of the hydrogen absorbing alloy, the mass of the hydrogen absorbing alloy produced in an arc furnace in an argon atmosphere is ground, to obtain the particles of the hydrogen absorbing alloy. Further, it is possible to obtain the particles of the hydrogen absorbing alloy by a gas atomizing method, a roll quenching method, or the like.

In the foregoing second step, when the particles of the hydrogen absorbing alloy are treated in the acid solution, an oxide coating on the surface of each of the particles of the hydrogen absorbing alloy is removed. Accordingly, active metal nickel Ni and metal cobalt Co appear on the surface of the particle of the hydrogen absorbing alloy.

In the second step, examples of the acid solution for treating the particles of the hydrogen absorbing alloy include hydrochloric acid, sulfuric acid, and phosphoric acid.

In treating the particles of the hydrogen absorbing alloy in such an acid solution, when the pH of the acid solution is too low, the particles of the hydrogen absorbing alloy are rapidly oxidized, so that nickel and cobalt on the surface of each of the particles of the hydrogen absorbing alloy are also dissolved. On the other hand, when the pH of the acid solution is high, the oxide coating on the surface of the particle of the hydrogen absorbing alloy is not sufficiently removed. Therefore, it is preferable that the pH in the early stages of the acid solution is in the range of 0.7 to 2.0.

In thus treating the particles of the hydrogen absorbing alloy in the acid solution, it is preferable that a nickel compound and a cobalt compound are added to the acid solution. Examples of the nickel compound to be added to the acid solution include nickel chloride $NiCl_2$ and nickel hydroxide $Ni(OH)_2$. Examples of the cobalt compound include

cobalt chloride $CoCl_2$ and cobalt hydroxide $Co(OH)_2$.

When the nickel compound and the cobalt compound are thus added to the acid solution to treat the particles of the hydrogen absorbing alloy, the nickel compound and the cobalt compound which have been added to the acid solution are respectively reduced to metal nickel and metal cobalt. The metal nickel and the metal cobalt thus reduced are deposited on the surface of the hydrogen absorbing alloy, so that a lot of active metal nickel and metal cobalt appear on the surface of each of the particles of the hydrogen absorbing alloy.

When the respective amounts of the nickel compound and the cobalt compound to be added to the acid solution are small, the respective amount of the metal nickel and the metal cobalt to be deposited on the surface of the hydrogen absorbing alloy are reduced, so that a lot of active metal nickel and metal cobalt cannot appear on the surface of each of the particles of the hydrogen absorbing alloy. On the other hand, when the respective amounts of the nickel compound and the cobalt compound to be added are too large, the respective amounts of the metal nickel and metal cobalt to be deposited on the surface of the particle of the hydrogen absorbing alloy are excessive. Accordingly, the surface of the particle of the hydrogen absorbing alloy is easily oxidized. Therefore, it is preferable that the respective amounts of the nickel compound and the cobalt compound to be added to the acid solution are in the range of 0.3 to 5.0 % by weight of the particle of the hydrogen absorbing alloy.

When the particles of the hydrogen absorbing alloy are thus treated in the acid solution, and the particles of the hydrogen absorbing alloy are then heat-treated and sintered at a temperature of not more than the melting point of the particles of the hydrogen absorbing alloy in a hydrogen atmosphere, an oxide on the surface of each of the particles of the hydrogen absorbing alloy is reduced, and manganese Mn contained in the particle of the hydrogen absorbing alloy is moved to the surface of the particle of the hydrogen absorbing alloy. The melting point of the particles of the hydrogen absorbing alloy having the above-mentioned composition is generally in the range of 1100°C to 1300°C and specifically, in the range of 1180°C and 1250°C. The particles of the hydrogen absorbing alloy is heat-treated at a temperature lower than the melting point.

The manganese Mn moved to the surface of the particle of the hydrogen absorbing alloy as described above is oxidized more easily than the metal nickel and the metal cobalt on the surface of the particle of the hydrogen absorbing alloy. The manganese is first oxidized on the surface of the particle of the hydrogen absorbing alloy, so that the metal nickel and the metal cobalt are prevented from being oxidized again. When the hydrogen absorbing alloy electrode using the particles of the hydrogen absorbing alloy is used as the alkaline storage battery, the manganese or an oxide of the manganese on the surface of the particle of the hydrogen absorbing alloy is gradually dissolved in the alkaline electrolyte in the alkaline storage battery, not to degrade the activity on the surface of the particle of the hydrogen absorbing alloy.

When the particles of the hydrogen absorbing alloy are treated in the acid solution in the second step, and the particles of the hydrogen absorbing alloy are then heat-treated and sintered at a temperature of not more than the melting point of the particles of the hydrogen absorbing alloy in the hydrogen atmosphere in the third step, as described above, a surface region 1b where the respective abundance ratios of nickel atoms, cobalt atoms, and manganese atoms are higher than those in an inner bulk region 1a is formed, and the particles 1 of the hydrogen absorbing alloy are welded together in the surface region 1b. Accordingly, contact resistance between the particles 1 of the hydrogen absorbing alloy is reduced.

A conductive core member is filled with the particles of the hydrogen absorbing alloy thus obtained, to produce a hydrogen absorbing alloy electrode for an alkaline storage battery.

When the hydrogen absorbing alloy electrode for an alkaline storage battery thus produced is used for a negative electrode to obtain an alkaline storage battery, a lot of active metal nickel, metal cobalt, and so forth appear on the surface of the hydrogen absorbing alloy, so that the activity in the early stages of the hydrogen absorbing alloy is sufficiently improved. Accordingly, an initial battery capacity is increased. The particles of the hydrogen absorbing alloy are welded together in the surface region, so that the contact resistance between the particles of the hydrogen absorbing alloy is reduced. Accordingly, high-rate discharge characteristics in the alkaline storage battery are also improved.

Brief Description of Drawings

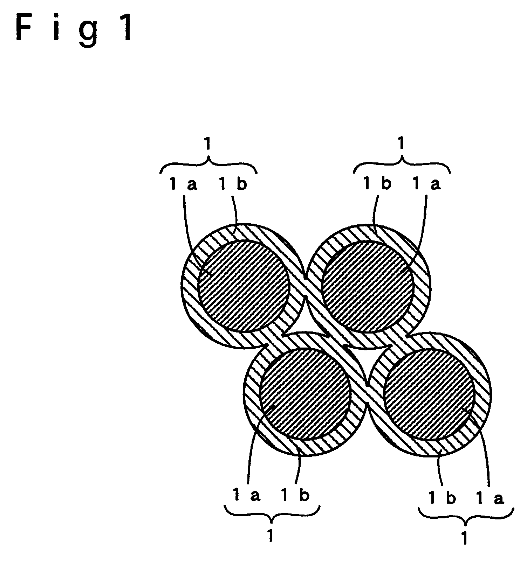

Fig. 1 is a schematic illustration showing the state of a hydrogen absorbing alloy produced by a method of producing a hydrogen absorbing alloy for an alkaline storage battery in the present invention.

Fig. 2 is a schematic cross-sectional view of an alkaline storage battery produced in examples and a comparative example of the present invention.

Best Mode for Carrying Out the Invention

A hydrogen absorbing alloy for an alkaline storage battery in each of examples of the present invention and a method of producing the same as well as a hydrogen absorbing alloy electrode for an alkaline storage battery and a method of producing the same will be specifically described, and a comparative example is taken, to clarify that those in the examples of the present invention are superior. The hydrogen absorbing alloy for an alkaline storage battery in the present invention and the method of producing the same as well as the hydrogen absorbing alloy electrode for an alkaline storage battery and the method of producing the same are not limited to those in the following examples, and can be embodied by being suitably changed in a range in which the gist thereof is not changed.

(Examples 1 to 10)

In the examples, in producing particles of a hydrogen absorbing alloy, as shown in the foregoing first step, Misch metal (Mm) which is a mixture of rare earth elements containing 25 % by weight of La, 50 % by weight of Ce, 7 % by weight of Pr, and 18 % by weight of Nd and Ni, Co, Mn and Al having a purity of 99.9 % were mixed at a molar ratio of 1.0 : 3.1 : 0.9 : 0.6 : 0.4. A mixture obtained was dissolved by an arc melting furnace in an argon atmosphere, and was then naturally cooled, to produce an ingot of a hydrogen absorbing alloy indicated by a composition formula $MmNi_{3.1}Co_{0.9}Mn_{0.6}Al_{0.4}$. The ingot of the hydrogen absorbing alloy was mechanically ground in the air and classified, to obtain particles of the hydrogen absorbing alloy having an average particle diameter of 80 $\mu$m.

In then treating the particles of the hydrogen absorbing alloy in an acid solution, as shown in the foregoing second step, a hydrochloric acid solution was used as the acid solution. Nickel chloride $NiCl_2$ which is a nickel compound was contained in the hydrochloric acid solution at a ratio of 0 % by weight to 10.0 % by weight, as shown in the following Table 1, to the particles of the hydrogen absorbing alloy, and the pH of the hydrochloric acid solution was adjusted to 1.0. The particles of the hydrogen absorbing alloy were treated upon being immersed in the hydrochloric acid solution for thirty minutes while being agitated. Thereafter, the particles of the hydrogen absorbing alloy thus treated were sucked in and filtered, and were rinsed and dried.

In heat-treating and sintering the particles of the hydrogen absorbing alloy thus treated in the acid solution at a temperature of not more than the melting point under a hydrogen atmosphere, as shown in the foregoing third step, the particles of the hydrogen absorbing alloy were sintered at a temperature of 600°C under the hydrogen atmosphere for six hours, to obtain particles of each of the hydrogen absorbing alloys in the examples 1 to 10. The melting point of the particles of the hydrogen absorbing alloy was approximately 1200°C.

(Comparative Example 1)

In the comparative example 1, particles of a hydrogen absorbing alloy indicated by a composition formula $MmNi_{3.1}Co_{0.9}Mn_{0.6}Al_{0.4}$ produced in the same manner as that in the first step in each of the examples 1 to 10 were used.

In treating the particles of the hydrogen absorbing alloy in an acid solution, nickel chloride $NiCl_2$ which is a nickel compound was not added to a hydrochloric acid solution, and the particles of the hydrogen absorbing alloy were immersed in the hydrochloric acid solution having a pH of 0.3 and having a liquid temperature of 25°C for thirty minutes while being agitated. Thereafter, the particles of the hydrogen absorbing alloy thus treated were sucked in and filtered, and were rinsed and dried.

The particles of the hydrogen absorbing alloy thus treated were then sintered at a temperature of 600°C under a hydrogen atmosphere for six hours, as in the examples 1 to 10, to obtain particles of the hydrogen absorbing alloy in the comparative example 1.

With respect to the particles of each of the hydrogen absorbing alloys in the examples 1 to 10 and the comparative example 1 obtained in the above-mentioned manner, the abundance ratio (atm%) of each of atoms in a surface region and the abundance ratio (atm%) of the atom in an inner bulk region were respectively measured using a scanning type transmission electron microscope and an energy dispersion type X-ray analysis meter.

With respect to the particles of each of the hydrogen absorbing alloys in the examples 1 to 10 and the comparative example 1, the sum a (atm%) of the respective abundance ratios of nickel atoms, cobalt atoms, and manganese atoms in the surface region and the sum b (atm%) of the respective abundance ratios of nickel atoms, cobalt atoms, and manganese atoms in the bulk region were found, to calculate the value of a/b. The results thereof were together shown in the following Table 1. In the particles of the hydrogen absorbing alloy in the example 1, in the surface region, the abundance ratio of the nickel atoms was 70.7 atm%, the abundance ratio of the cobalt atoms was 16.7 atm%, the abundance ratio of the manganese atoms was 4.6 atm%, and the sum a of the abundance ratios was 92.0 atm%. On the other hand, in the bulk region, the abundance ratio of the nickel atoms was 51.7 atm%, the abundance ratio of the cobalt atoms was 15.1 atm%, the abundance ratio of the manganese atoms was 9.9 atm%, and the sum b of the abundance ratios was 76.7 atm%. The value of a/b was 1.20.

A hydrogen absorbing alloy electrode was then produced using the particles of each of the hydrogen absorbing alloys in the examples 1 to 10 and the comparative example 1 obtained in the above-mentioned manner.

In producing each of the hydrogen absorbing alloy electrodes, 100 parts by weight of the particles of each of the hydrogen absorbing alloys in the examples 1 to 10 and the comparative example 1 and 20 parts by weight of a 5 % solution by weight of polyethylene oxide (PEO) which is a binder were mixed to prepare paste. Both surfaces of a conductive core member composed of a punching metal which was nickel-plated were coated and filled with the paste, and the conductive core member filled and coated with the paste was then dried at room temperature, and was then cut to a predetermined size, to produce the hydrogen absorbing alloy electrode.

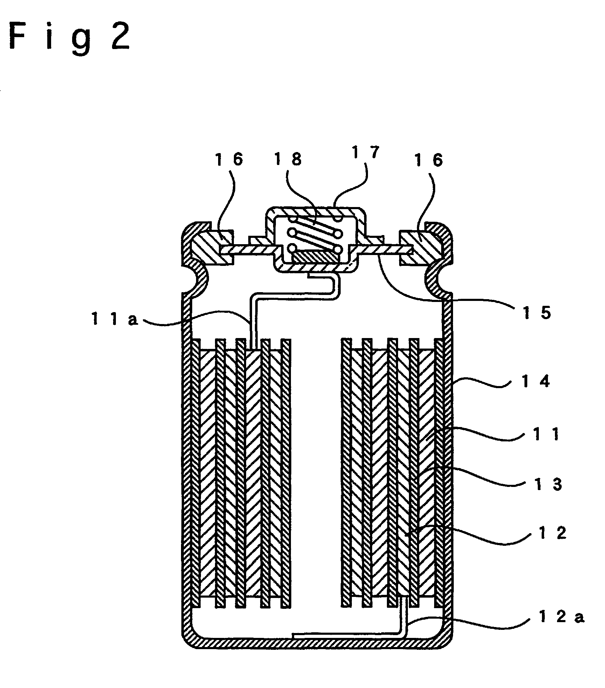

Each of the hydrogen absorbing alloy electrodes thus produced was used as a negative electrode, while a sintered nickel electrode was used as a positive electrode. A non woven fabric having alkali resistance was used for a separator, and a 30 % potassium hydroxide solution by weight was used as an alkaline electrolyte, to produce an alkaline storage battery of a positive electrode control type of AA size and having a battery capacity of 1000 mAh, as shown in Fig. 2.

In producing each of the above-mentioned alkaline storage batteries, a separator 13 was interposed between a positive electrode 11 and a negative electrode 12, the positive electrodes 11, the negative electrodes 12, and the separators 13 were wound in a spiral shape and were contained in a battery can 14, after which the alkaline electrolyte was poured into the battery can 14, and the battery can 14 was sealed, as shown in Fig. 2. The positive electrode 11 was connected to a positive electrode cover 15 through a positive electrode lead 11a, and the negative electrode 12 is connected to the battery can 14 through a negative electrode lead 12a, to electrically separate the battery can 14 and the positive electrode cover 15 from each other by an insulating packing 16. Further, a coil spring 18 is provided between the positive electrode cover 15 and a positive electrode external terminal 17. When the internal pressure of the battery is abnormally raised, the coil spring 18 is compressed so that gas inside the battery is released in the air.

With respect to the alkaline storage battery produced using the particles of each of the hydrogen absorbing alloys in the examples 1 to 10 and the comparative example 1, an initial discharge capacity (mAh) and a high-rate discharge capacity (mAl) were found. The results thereof were together shown in the following Table 1.

In finding the initial discharge capacity, each of the alkaline storage batteries produced in the above-mentioned manner was charged at a current value of 0.2 C under room temperature for six hours, and was then discharged to 1.0 V at a current value of 0.2 C, to measure a discharge capacity in the first cycle. The discharge capacity in the first cycle was taken as an initial discharge capacity.

In finding the high-rate discharge capacity, the initial discharge capacity was found in the above-mentioned manner, and each of the alkaline storage batteries was then charged and discharged in three cycles in the same manner as described above. Thereafter, the alkaline storage battery was charged at a current value of 0.2 C under room temperature for six hours, and was discharged to 1.0 V at a high current value of 6.0 C. The discharge capacity was measured, and was taken as a high-rate discharge capacity.

(Table 1)

| | acid solution | | a/b | initial discharge capacity (mAh) | high-rate discharge capacitu (mAh) |
|---|---|---|---|---|---|
| | pH | content of $NiCl_2$ | | | |
| example 1 | 1.0 | no added | 1.20 | 730 | 730 |
| example 2 | 1.0 | 0.3 % by weight | 1.21 | 810 | 800 |
| example 3 | 1.0 | 0.5 % by weight | 1.22 | 820 | 815 |
| example 4 | 1.0 | 0.7% by weight | 1.23 | 830 | 830 |
| example 5 | 1.0 | 1.0 % by weight | 1.24 | 830 | 835 |
| example 6 | 1.0 | 2.0 % by weight | 1.26 | 840 | 835 |
| example 7 | 1.0 | 3.0 % by weight | 1.27 | 840 | 840 |
| example 8 | 1.0 | 5.0 % by weight | 1.28 | 820 | 835 |
| example 9 | 1.0 | 7.0 % by weight | 1.29 | 780 | 775 |
| example 10 | 1.0 | 10.0 % by weight | 1.29 | 770 | 760 |
| comparative example 1 | 0.3 | no added | 1.14 | 670 | 690 |

As a result, in the particles of each of the hydrogen absorbing alloys in the examples 1 to 10 so adapted that in the second step in which the particles of the hydrogen absorbing alloy were treated in the acid solution, the particles of the hydrogen absorbing alloy were treated in a hydrochloric acid solution containing 0 % by weight to 10.0 % by weight of nickel chloride $NiCl_2$ which is a nickel compound in the particles of the hydrogen absorbing alloy and having a pH adjusted to 1.0, the ratio (a/b) of the sum a (atm%) of the respective abundance ratios of nickel atoms, cobalt atoms, and manganese atoms in the surface region to the sum b (atm%) of the respective abundance ratios of nickel atoms, cobalt atoms, and manganese atoms in the bulk region was not less than 1.20, and the value of a/b was increased as the amount of the nickel chloride $NiCl_2$ contained in the hydrochloric acid solution was increased.

On the other hand, in the particles of the hydrogen absorbing alloy in the comparative example 1 in which in treating the particles of the hydrogen absorbing alloy in the acid solution, the particles of the hydrogen absorbing alloy were treated in a hydrochloric acid solution containing no nickel chloride $NiCl_2$ which is a nickel compound and having a pH adjusted to 0.3, the inside of each of the particles of the hydrogen absorbing alloy was also dissolved by the hydrochloric acid solution, and the value of a/b was as low as 1.14.

In the alkaline storage battery produced using the particles of each of hydrogen absorbing alloys in the examples 1 to 10 in which the value of a/b was not less than 1.20, the initial discharge capacity and the high-rate discharge capacity were made larger, as compared with those in the alkaline storage battery produced using the particles of the hydrogen absorbing alloy in the comparative example 1 in which the value of a/b was as low as 1.14. Particularly, in the alkaline storage battery using the particles of each of the hydrogen absorbing alloys in the examples 2 to 8 treated using a hydrochloric acid solution containing 0.3 % by weight to 5.0 % by weight of nickel chloride $NiCl_2$ to be contained in the hydrochloric acid solution to the particle of the hydrogen absorbing alloy, the initial discharge capacity assumed a high value of 800 mAh to 840 mAh, and the high-rate discharge capacity assumed a high value of 800 mAh to 840 mAh. In treating the particles of the hydrogen absorbing alloy in the hydrochloric acid solution, it was preferable that 0.3 % by weight to 5.0 % by weight of $NiCl_2$ was added to the particles of the hydrogen absorbing alloy.

Although in the examples 1 to 10, the hydrochloric acid solution was used as the acid solution in the second step, the same effect also appeared in a case where a nitric acid solution, a phosphoric acid solution, or the like was used. Further, nickel chloride $NiCl_2$ was contained in the hydrochloric acid solution. However, the same effect also appeared in a case where another nickel compound such as nickel hydroxide $Ni(OH)_2$ or a cobalt compound such as cobalt chloride $CoCl_2$ or cobalt hydroxide $Co(OH)_2$ was contained.

(Examples 11 to 15)

Also in the examples 11 to 15, particles of a hydrogen absorbing alloy represented by a composition formula $MmNi_{3.1}Co_{0.9}Mn_{0.6}Al_{0.4}$ produced in the same manner as that in the foregoing first step in each of the examples 1 to 10 were used.

In treating the particles of the hydrogen absorbing alloy in an acid solution, as shown in the foregoing second step, 0.3 % by weight of nickel chloride $NiCl_2$ which is a nickel compound was contained in the particles of the hydrogen absorbing alloy, as in the example 7, while the particles of the hydrogen absorbing alloy were treated in the hydrochloric acid solution in the same manner as those in the examples 1 to 10 except that the pH of the hydrochloric acid solution was changed in the range of 0.3 to 3.0, as shown in the following Table 2.

In heat-treating and sintering the particles of each of the hydrogen absorbing alloys thus treated in the acid solution at a temperature of not more than the melting point under a hydrogen atmosphere, as in the third step, the particles of the hydrogen absorbing alloy were sintered at a temperature of 600°C under a hydrogen atmosphere for six hours, as in the examples 1 to 10.

With respect to the particles of each of the hydrogen absorbing alloys in the examples 11 to 15 thus obtained, the sum a (atm%) of the respective abundance ratios of nickel atoms, cobalt atoms, and manganese atoms in a surface region and the sum b (atm%) of the respective abundance ratios of nickel atoms, cobalt atoms and manganese atoms in a bulk region were also found, as in the examples 1 to 10, to calculate the value of a/b. The results thereof were together shown in the following Table 2.

A hydrogen absorbing alloy electrode was produced, as in the examples 1 to 10, using the particles of each of the hydrogen absorbing alloys in the examples 11 to 15 obtained in the above-mentioned manner, and an alkaline storage battery of a positive electrode control type of AA size and having a battery capacity of 1000 mAh was produced using the hydrogen absorbing alloy.

With respect to each of the alkaline storage batteries, an initial discharge capacity (mAh) and a high-rate discharge capacity (mAh) were also found, as in the examples 1 to 10. The results thereof, together with those in the example 7, were shown in the following Table 2.

(Table 2)

| | acid solution | | a/b | initial discharge capacity (mAh) | high-rate discharge capacitu (mAh) |
|---|---|---|---|---|---|
| | pH | content of $NiCl_2$ | | | |
| example 11 | 0.3 | 3.0 % by weight | 1.20 | 770 | 780 |
| example 12 | 0.5 | 3.0 % by weight | 1.22 | 790 | 795 |
| example 13 | 0.7 | 3.0 % by weight | 1.25 | 830 | 840 |
| example 7 | 1.0 | 3.0 % by weight | 1.27 | 840 | 840 |
| example 14 | 2.0 | 3.0 % by weight | 1.25 | 830 | 835 |
| example 15 | 3.0 | 3.0 % by weight | 1.20 | 790 | 795 |

As a result, in the particles of each of the hydrogen absorbing alloys in the examples 7 and 11 to 15 so adapted that in the second step in which the particles of the hydrogen absorbing alloy were treated in the acid solution, the particles of the hydrogen absorbing alloy were treated in a hydrochloric acid solution containing 3.0 % by weight of nickel chloride $NiCl_2$ which is a nickel compound in the particles of the hydrogen absorbing alloy and having a pH adjusted in the range of 0.3 to 3.0, the ratio (a/b) of the sum a (atm%) of the respective abundance ratios of nickel atoms, cobalt atoms, and manganese atoms in the surface region to the sum b (atm%) of the respective abundance ratios of nickel atoms, cobalt atoms, and manganese atoms in the bulk region was not less than 1.20. Particularly in the particles of the hydrogen absorbing alloy in the example 7 treated using a hydrochloric acid solution having a pH of 1.0, the value of a/b was the highest, i.e., 1.27. The reason for this is conceivably that the nickel atoms and the cobalt atoms in the surface region were also dissolved, and the respective numbers of the nickel atoms and the cobalt atoms in the surface region were reduced when the pH of the hydrochloric acid solution is too low, while an oxide coating on the surface of each of the particles of the hydrogen absorbing alloy was not sufficiently removed when the pH of the hydrochloric acid solution was increased.

Also in the alkaline storage battery produced using the particles of each of the hydrogen absorbing alloys in the examples 11 to 15, the initial discharge capacity and the high-rate discharge capacity were larger, as compared with those in the alkaline storage battery produced using the particles of the hydrogen absorbing alloy in the comparative example 1. Particularly in the alkaline storage battery using the particles of each of the hydrogen absorbing alloys in the examples 13, 7, and 14 treated with the pH of the hydrochloric acid solution set in the range of 0.7 to 2.0, the initial discharge capacity assumed a high value of 830 mAh to 840 mAh, and the high-rate discharge capacity assumed a high value of 835 mAh to 840 mAh. In treating the particles of the hydrogen absorbing alloy in the hydrochloric acid solution, it was preferable that the pH thereof was set in the range of 0.7 to 2.0.

Although in each of the examples 11 to 15, the hydrochloric acid solution was also used as the acid solution in the second step, the same effect also appeared in a case where a nitric acid solution, a phosphoric acid solution, or the like was used. Further, nickel chloride $NiCl_2$ was contained in the hydrochloric acid solution. However, the same effect also appeared in a case where another nickel compound such as nickel hydroxide $Ni(OH)_2$ and a cobalt compound such as cobalt chloride $CoCl_2$ or cobalt hydroxide $Co(OH)_2$ were contained.

Although in each of the examples, in producing the particles of the hydrogen absorbing alloy in the first step, the particles of the hydrogen absorbing alloy obtained by grinding the mass of the hydrogen absorbing alloy were produced using an arc furnace in an argon atmosphere, the particles of the hydrogen absorbing alloy can be also produced using a gas atomizing method or a roll quenching method. The same effect also appeared in a case where the particles of the hydrogen absorbing alloy, which were easy to sinter, thus obtained by the gas atomizing method or the roll quenching method were used.

Industrial Applicability

As described in detail above, in a hydrogen absorbing alloy for an alkaline storage battery in the present invention and a hydrogen absorbing alloy for an alkaline storage battery obtained by a method of producing the hydrogen absorbing alloy for an alkaline storage battery in the present invention, a lot of active metal nickel and metal cobalt appear on the surface of each of particles of the hydrogen absorbing alloy, and the metal nickel and metal cobalt are prevented from being oxidized again. Further, the particles of the hydrogen absorbing alloy are welded together in a surface region in the hydrogen absorbing alloy.

When a hydrogen absorbing alloy electrode for an alkaline storage battery using the hydrogen absorbing alloy is used as a negative electrode of the alkaline storage battery, the activity in the early stages of the hydrogen absorbing alloy is enhanced, so that an initial battery capacity in the alkaline storage battery is improved. Further, contact resistance between the particles of the hydrogen absorbing alloy is reduced, so that high-rate discharge characteristics in the alkaline storage battery are also improved.

## Claims

1. A hydrogen absorbing alloy for an alkaline storage battery having a crystal structure of a $CaCu_5$ type and represented by a composition formula $MmNi_xCo_yMn_zM_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), characterized by having a surface region and a bulk region covered with the surface region, the surface region and the bulk region differing in composition, and satisfying the condition of $a/b \geqq 1.2$, letting a be the sum of the respective abundance ratios of atoms Ni, Co, and Mn in the surface region and letting b the sum of the respective abundance ratios of atoms Ni, Co, and Mn.

2. A method of producing a hydrogen absorbing alloy for an alkaline storage battery, characterized in that the first step of obtaining particles of a hydrogen absorbing alloy having a crystal structure of a $CaCu_5$ type and represented by a composition formula $MmNi_xCo_yMn_zM_{1-z}$ (in the formula, M is at least one element selected from aluminum Al, and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), the second step of treating said particles of the hydrogen absorbing alloy in an acid solution, and the third step of heat-treating and sintering the particles of the hydrogen absorbing alloy treated in the acid solution at a temperature of not more than the melting point of the particles of the hydrogen absorbing alloy in a hydrogen atmosphere are carried out, to produce the hydrogen absorbing alloy having a surface region and a bulk region covered with the surface region and satisfying the condition of $a/b \geqq 1.2$, letting a be the sum of the respective abundance ratios of atoms Ni, Co, and Mn in the surface region and letting b the sum of the respective abundance ratios of atoms Ni, Co, and Mn.

3. The method according to claim 2, characterized in that at least one of a nickel compound and a cobalt compound is added to the acid solution in said second step.

4. The method according to claim 3, characterized in that in adding at least one of a nickel compound and a cobalt compound to the acid solution, the amount of the compound to be added is in the range of 0.3 to 5.0 % by weight of the particles of the hydrogen absorbing alloy.

5. The method according to claim 2, characterized in that the pH of the acid solution in said second step is in the range of 0.7 to 2.0.

6. A hydrogen absorbing alloy electrode for an alkaline storage battery, characterized in that a conductive core member is filled with the hydrogen absorbing alloy for an alkaline storage battery according to claim 1.

7. A hydrogen absorbing alloy electrode for an alkaline storage battery, characterized in that a conductive core member is filled with the hydrogen absorbing alloy for an alkaline storage battery according to claim 1.

## Amended claims under Art. 19.1 PCT

1. (Amended) A hydrogen absorbing alloy for an alkaline storage battery having a crystal structure of a $CaCu_5$ type and represented by a composition formula $MmNi_xCo_yMn_zM_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), characterized by having a sintered surface region and a bulk region covered with the surface region, the surface region and the bulk region differing in composition, and satisfying the condition of $a/b \geqq 1.2$, letting a be the sum of the respective abundance ratios of atoms Ni, Co, and Mn in the surface region and letting b the sum of the respective abundance ratios of atoms Ni, Co, and Mn, and the surface region having an atom manganese Mn.

2. (Amended) A method of producing a hydrogen absorbing alloy for an alkaline storage battery, characterized in that the first step of obtaining particles of a hydrogen absorbing alloy having a crystal structure of a CaCu$_5$ type and represented by a composition formula MmNi$_x$Co$_y$Mn$_z$M$_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), the second step of treating said particles of the hydrogen absorbing alloy in an acid solution, and the third step of heat-treating and sintering the particles of the hydrogen absorbing alloy treated in the acid solution at a temperature of not more than the melting point of the particles of the hydrogen absorbing alloy in a hydrogen atmosphere are carried out, to produce the hydrogen absorbing alloy having a sintered surface region and a bulk region covered with the surface region and satisfying the condition of $a/b \geqq 1.2$, letting a be the sum of the respective abundance ratios of atoms Ni, Co, and Mn in the surface region and letting b the sum of the respective abundance ratios of atoms Ni, Co, and Mn and the surface region having an atom manganese Mn.

3. The method according to claim 2, characterized in that at least one of a nickel compound and a cobalt compound is added to the acid solution in said second step.

4. The method according to claim 3, characterized in that in adding at least one of a nickel compound and a cobalt compound to the acid solution, the amount of the compound to be added is in the range of 0.3 to 5.0 % by weight of the particles of the hydrogen absorbing alloy.

5. The method according to claim 2, characterized in that the pH of the acid solution in said second step is in the range of 0.7 to 2.0.

6. A hydrogen absorbing alloy electrode for an alkaline storage battery, characterized in that a conductive core member is filled with the hydrogen absorbing alloy for an alkaline storage battery according to claim 1.

7. A hydrogen absorbing alloy electrode for an alkaline storage battery, characterized in that a conductive core member is filled with the hydrogen absorbing alloy for an alkaline storage battery according to claim 1.

8. (New) A hydrogen absorbing alloy for an alkaline storage battery having a crystal structure of a CaCu$_5$ type and represented by a composition formula MmNi$_x$Co$_y$Mn$_z$M$_{1-z}$ (in the formula, M is at least one element selected from aluminum Al and copper Cu, x is a composition ratio of nickel Ni and satisfies $3.0 \leqq x \leqq 5.2$, y is a composition ratio of cobalt Co and satisfies $0 \leqq y \leqq 1.2$, and z is a composition ratio of manganese Mn and satisfies $0.1 \leqq z \leqq 0.9$, with the proviso that the sum of x, y, and z satisfies $4.4 \leqq x + y + z \leqq 5.4$ ), and having the melting point at more than 1100 °C, characterized by having a sintered surface region and a bulk region covered with the surface region, the surface region and the bulk region differing in composition, and satisfying the condition of $a/b \geqq 1.2$, letting a be the sum of the respective abundance ratios of atoms Ni, Co, and Mn in the surface region and letting b the sum of the respective abundance ratios of atoms Ni, Co, and Mn and the surface region having an atom manganese Mn.

9. (New) A hydrogen absorbing alloy electrode for an alkaline storage battery, characterized in that a conductive core member is filled with the hydrogen absorbing alloy for an alkaline storage battery according to claim 8.

10. (New) A hydrogen absorbing alloy electrode for an alkaline storage battery, characterized in that a conductive core member is filled with the hydrogen absorbing alloy for an alkaline storage battery according to claim 8.

# F i g 1

# Fig 2

| | INTERNATIONAL SEARCH REPORT | International application No. |
|---|---|---|
| | | PCT/JP99/03234 |

**A. CLASSIFICATION OF SUBJECT MATTER**
  Int.Cl⁶ H01M4/38

According to International Patent Classification (IPC) or to both national classification and IPC

**B. FIELDS SEARCHED**

Minimum documentation searched (classification system followed by classification symbols)
  Int.Cl⁶ H01M4/24-4/26, 4/38

Documentation searched other than minimum documentation to the extent that such documents are included in the fields searched
  Jitsuyo Shinan Koho          1926-1996  Toroku Jitsuyo Shinan Koho  1994-1999
  Kokai Jitsuyo Shinan Koho  1971-1999  Jitsuyo Shinan Toroku Koho  1996-1999

Electronic data base consulted during the international search (name of data base and, where practicable, search terms used)
  WPI/L

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 10-106557, A (Sanyo Electric Co., Ltd.),<br>24 April, 1998 (24. 04. 98),<br>Claims 1, 3 ; Par. Nos. [0021] to [0038]<br>(Family: none) | 1, 6, 7<br>2-5 |
| X<br>Y | JP, 10-21907, A (Chuo Denki Kogyo K.K.),<br>23 January, 1998 (23. 01. 98),<br>Claim 2 ; Par. Nos. [0012] to [0014], [0021], [0025]<br>to [0029], [0076] (Family: none) | 1, 6, 7<br>2-5 |
| Y | JP, 10-149824, A (Matsushita Electric Industrial<br>Co., Ltd.),<br>2 June, 1998 (02. 06. 98),<br>Claims 1, 2, 4, 5, Par. Nos. [0011], [0038], [0039]<br>(Family: none) | 1-7 |
| Y | JP, 8-287909, A (Varta Batterie AG.),<br>1 November, 1996 (01. 11. 96),<br>Claims & EP, 736919, A1<br>& DE, 19512841, A1 & US, 5738953, A | 1-7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 14 September, 1999 (14. 09. 99) | 28 September, 1999 (28. 09. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP99/03234 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 9-213319, A (Matsushita Electric Industrial Co., Ltd.),<br>15 August, 1997 (15. 08. 97),<br>Claims (Family: none) | 1-7 |
| X<br>Y | JP, 9-63573, A (Toyoda Automatic Loom Works,Ltd.),<br>7 March, 1997 (07. 03. 97),<br>Claims 1, 5 ; Par. No. [0007] ; Examples 5 to 9<br>(Family: none) | 1, 2, 5-7<br>3, 4 |
| X<br>Y | JP, 9-237628, A (Sanyo Electric Co., Ltd.),<br>9 September, 1997 (09. 09. 97),<br>Claims 1, 3 ; Par. Nos. [0014], [0027] ; Tables 1,<br>2, 3 (Family: none) | 1, 2, 5-7<br>3, 4 |
| X<br>Y | JP, 10-50309, A (Yuasa Corp.),<br>20 February, 1998 (20. 02. 98),<br>Claims ; Par. Nos. [0016] to [0019] (Family: none) | 1, 6, 7<br>2-5 |
| X<br>Y | JP, 9-330713, A (Sanyo Electric Co., Ltd.),<br>22 December, 1997 (22. 12. 97),<br>Claim 1 ; Par. Nos. [0008], [0013] to [0015]<br>(Family: none) | 1, 6, 7<br>2-5 |
| P, X | JP, 10-162820, A (Sanyo Electric Co., Ltd.),<br>19 June, 1998 (19. 06. 98),<br>Claims 1, 4, 6 ; Par. Nos. [0026] to [0029], [0055]<br>(Family: none) | 1-7 |
| X<br>Y | WO, 97/50135, A1 (Sanyo Electric Co., Ltd.),<br>31 December, 1997 (31. 12. 97),<br>Full text (Family: none) | 1, 6, 7<br>2-5 |

Form PCT/ISA/210 (continuation of second sheet) (July 1992)